Europäisches Patentamt

European Patent Office

Office européen des brevets

(19)

(11) Veröffentlichungsnummer: **0 054 980**
**B1**

(12) **EUROPÄISCHE PATENTSCHRIFT**

(45) Veröffentlichungstag der Patentschrift:
**25.01.84**

(51) Int. Cl.³: **F 02 B 47/08**, F 02 B 33/44

(21) Anmeldenummer: **81201111.2**

(22) Anmeldetag: **07.10.81**

(54) **Verfahren zum Betrieb einer Brennkraftmaschine mit abschaltbarem Ladegebläse und Einrichtung zur Durchführung des Verfahrens.**

(30) Priorität: **22.12.80 CH 9453/80**

(43) Veröffentlichungstag der Anmeldung:
**30.06.82 Patentblatt 82/26**

(45) Bekanntmachung des Hinweises auf die Patenterteilung:
**25.01.84 Patentblatt 84/4**

(84) Benannte Vertragsstaaten:
**DE FR GB IT NL**

(56) Entgegenhaltungen:
**CH - A - 107 453**
**CH - A - 517 015**
**DE - A - 2 823 671**
**JP - A - 55 040 209**

(73) Patentinhaber: **BBC Aktiengesellschaft Brown, Boveri & Cie., Haselstrasse, CH-5401 Baden (CH)**

(72) Erfinder: **Mayer, Andreas, Fohrhölzlistrasse 14b, CH-5442 Niederrohrdorf (CH)**
Erfinder: **Schwarz, Martin, Rütisteig 1, CH-5115 Möriken (CH)**

ACTORUM AG

Verfahren zum Betrieb einer Brennkraftmaschine mit abschaltbarem Ladegebläse und Einrichtung zur Durchführung des Verfahrens

Die Erfindung betrifft ein Verfahren zum Betrieb einer Brennkraftmaschine mit einem abschaltbaren Ladegebläse, sowie eine Einrichtung zur Durchführung des Verfahrens.

An Brennkraftmaschinen, insbesondere an solche in Fahrzeugen, werden immer höhere Anforderungen zur Schadstoffverringerung in den Abgasen gestellt. Bei den als Fahrzeugantrieben zur Anwendung kommenden Dieselmotoren weisen diese gegenüber Ottomotoren niedrigere Konzentrationswerte an Kohlenmonoxyd (CO) und Kohlenwasserstoffen (HC) im Abgas auf. Bei verbrauchsoptimierten Dieselmotoren sind die Emissionen an Stickoxyden ($NO_x$) zu hoch.

Diese Stickoxydemissionen können durch verschiedene Massnahmen verringert werden, beispielsweise durch katalytische Oxydation und Auswaschen, durch Wassereinspritzung in den Verbrennungsraum zur Senkung der Verbrennungstemperaturen, sowie durch Rückführen von Abgasen in den Verbrennungsraum. Auch durch diese Massnahme können die Verbrennungstemperaturen gesenkt werden. Derartige Abgasrückführungen werden sowohl bei Dieselals auch bei Ottomotoren verwendet.

Gemäss einer Veröffentlichung in «Schnelle Motoren» von Helmut Hutten (6. neubearbeitete Auflage, Seite 264), sind zu- bzw. abschaltbare Verdichter bekannt. Diese können über eine Kupplung zu- bzw. abgeschaltet werden, d.h. wenn sie bei einem niedrigen Leistungsbedarf abgeschaltet werden, läuft der Motor auch schon im Saugbetrieb, aufgrund dessen Auslegung mit geringerem Schadstoffausstoss als ein nicht aufgeladener Motor gleicher Maximalleistung.

Es ist Aufgabe der vorliegenden Erfindung, an einem Motor mit zuschaltbarem Verdichter die an sich bekannten Vorteile der Abgasrückführung zu nutzen.

Die vorgenannte Aufgabe wird einmal durch die erfindungsgemässen Verfahrensschritte gelöst, und zwar dadurch, dass

a) bei Leerlauf und unterer Teillast der Verdichter abgeschaltet ist und Verbrennungsluft aus der Atmosphäre angesaugt wird und ein Teil der Abgase über eine Abgasrückführungsleitung dem Ansaugluftstrom beigemischt wird, wobei eine Gebläsedruckleitung des Verdichters durch ein Absperrorgan verschlossen ist;
b) bei oberer Teillast und Vollast der Verdichter Verbrennungsluft aus der Atmosphäre verdichtet und durch einen Ansaugstutzen der Brennkraftmaschine zugeführt wird, während die Abgasrückführung und die Luftansaugung aus der Atmosphäre durch das Absperrorgan unterbrochen werden,

und zum anderen durch die erfindungsgemässe Einrichtung, wobei eine Abgasrückführungsleitung gegenüber der Gebläsedruckleitung in die Ansaugleitung mündet und ein Absperrorgan so angeordnet ist, dass bei Saugbetrieb die Gebläsesedruckleitung und bei Laderbetrieb die Ansaugleitung und die Abgasrückführungsleitung verschlossen sind.

Dadurch wird erreicht, dass bei Leerlauf und unterer Teillast und abgeschaltetem Verdichter, also in einem Zustand, wo beim Ansaugen von Luft aus der Atmosphäre eine Abgasrückführung erwünscht ist, diese erfolgen kann, während durch Betätigung des Absperrorganes und bei zugeschaltetem Verdichter bei oberer Teillast und Vollast, bei denen eine Abgasrückführung nicht erforderlich ist, diese auf einfache Weise unterbunden werden kann. Das Absperrorgan wird automatisch dann betätigt, wenn der Verdichter entweder ein- oder abgeschaltet wird, d.h. bei abgeschaltetem Verdichter wird das Absperrorgan die Gebläsedruckleitung verschliessen und die Ansaugleitung sowie die Abgasrückführungsleitung freigeben. Wenn dem Motor verdichtete Luft zugeführt wird, d.h. der Verdichter wird zugeschaltet, dann öffnet das Absperrorgan automatisch die Gebläsedruckleitung und verschliesst die Ansaugluftleitung und die Abgasrückführungsleitung.

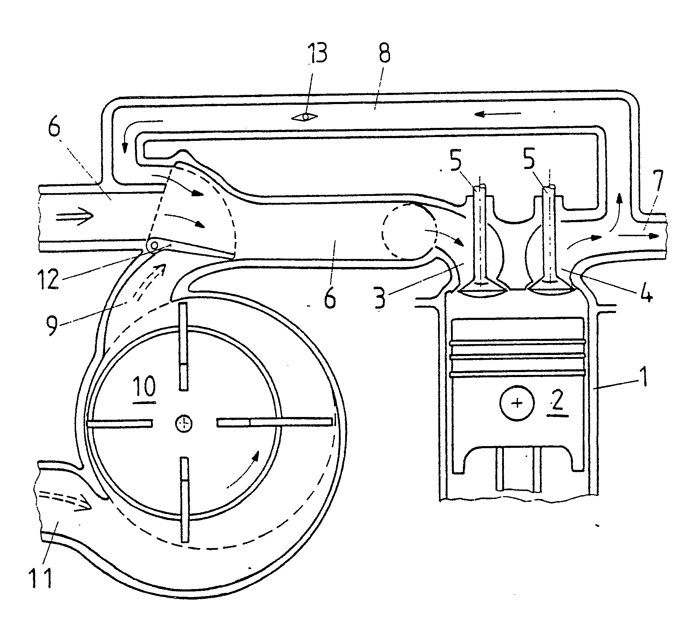

In der Zeichnung ist in vereinfachter Weise ein Schema der erfindungsgemässen Einrichtung dargestellt, und mit 1 ein Zylinder mit Kolben 2 einer Brennkraftmaschine bezeichnet. Am Zylinderkopf ist je ein Ansaugstutzen 3 und ein Abgasstutzen 4 mit dazugehörigen Ventilen 5 angeordnet. In die beiden Stutzen 3, 4 mündet jeweils eine Ansaugleitung 6, resp. eine Abgasleitung 7. Von der Abgasleitung 7 zweigt eine Abgasrückführungsleitung 8 ab und mündet in die Ansaugleitung 6. Etwa gegenüber der Einmündung der Abgasrückführungsleitung 8 in die Ansaugleitung 6 mündet ebenfalls eine Gebläsedruckleitung 9 eines Verdichters 10, welcher über einen Lufteintrittstutzen 11 Verbrennungsluft ansaugt. An der Einmündung der Gebläsedruckleitung 9 und der Abgasrückführungsleitung 8 ist ein Absperrorgan 12, vorzugsweise als Rückschlagklappe ausgebildet, vorgesehen. Das Absperrorgan 12 ist so ausgebildet, dass damit über eine (nicht dargestellte) Betätigungsvorrichtung, welche gleichzeitig auch als Zuschaltvorrichtung für den Verdichter 10 dienen kann, die Ansaugleitung 6 und die Abgasrückführungsleitung 8 verschlossen werden, so dass die Brennkraftmaschine bei Ladebetrieb nur über die Gebläsedruckleitung 9 Verbrennungsluft erhält. Bei geschlossenem Absperrorgan 12 wird dadurch ebenfalls der Eintritt von verdichteter Luft in die Abgasrückführungsleitung 8 und in den vor der Einmündung liegenden Teil der Ansaugleitung 6 verhindert. Beim Abschalten des Verdichters 10 gibt das Absperrorgan 12 die Ansaugleitung 6 und die Abgasrückführungsleitung 8 frei, während gleichzeitig die Gebläsedruckleitung 9 abgesperrt ist. In der Abgasrückführungsleitung 8 ist eine Drosselklappe 13 vorgesehen, welche vorzugsweise über ein (nicht dargestelltes) Fahrpedal gesteuert wird, so dass beim Anlassvorgang entweder die Abgasrückführung im Saugbetrieb, d.h. bei offener Ansaugleitung 6 unterbunden werden kann, oder bei Teillast und ebenfalls im Saugbetrieb des Motors eine zusätzliche Feinregulierung der Abgas-Rückführungsmenge ermöglicht wird.

Bezeichnungsliste
1 Zylinder
2 Kolben
3 Ansaugstutzen
4 Abgasstutzen
5 Ventile
6 Ansaugleitung
7 Abgasleitung
8 Abgasrückführungsleitung
9 Gebläsedruckleitung
10 Verdichter
11 Lufteintrittstutzen
12 Absperrorgan
13 Drosselklappe der Abgasrückführungsleitung

## Patentansprüche

1. Verfahren zum Betrieb einer Brennkraftmaschine mit einem abschaltbaren Ladegebläse, dadurch gekennzeichnet, dass

a) bei Leerlauf und unterer Teillast der Verdichter (10) abgeschaltet ist und Verbrennungsluft aus der Atmosphäre angesaugt wird und ein Teil der Abgase über eine Abgasrückführungsleitung (8) dem Ansaugluftstrom beigemischt wird, wobei eine Gebläsedruckleitung (9) des Verdichters (10) durch ein Absperrorgan (12) verschlossen ist;
b) bei oberer Teillast und Vollast der Verdichter (10) Verbrennungsluft aus der Atmosphäre verdichtet und durch einen Ansaugstutzen (3) der Brennkraftmaschine zuführt, während die Abgasrückführung und die Luftansaugung aus der Atmosphäre durch das Absperrorgan (12) unterbrochen werden.

2. Einrichtung zur Durchführung des Verfahrens nach Anspruch 1, bei welcher ein Verdichter (10) über eine Gebläsedruckleitung (9) mit einer Ansaugleitung (6) verbunden ist, dadurch gekennzeichnet, dass eine Abgasrückführungsleitung (8) gegenüber der Gebläsedruckleitung (9) in die Ansaugleitung (6) mündet und ein Absperrorgan (12) so angeordnet ist, dass bei Saugbetrieb die Gebläsedruckleitung (9) und bei Laderbetrieb die Ansaugleitung (6) und die Abgasrückführungsleitung (8) verschlossen sind.

## Revendications

1. Procédé en vue de faire fonctionner un moteur à combustion interne comportant un surcompresseur pouvant être mis hors service, caractérisé en ce que:

a) en marche à vide et en charge partielle inférieure, le compresseur (10) est mis hors service, l'air de combustion est aspiré de l'atmosphère et, via une conduite (8) de recyclage des gaz d'échappement, une partie de ces derniers vient se mélanger au courant d'air d'aspiration, une conduite de refoulement (9) du compresseur (10) étant fermée par un organe d'arrêt (12);

b) en charge partielle supérieure et en pleine charge, le compresseur (10) comprime l'air de combustion provenant de l'astmosphère et l'achemine au moteur à combustion interne via une tubulure d'aspiration (3), tandis que le recyclage des gaz d'échappement et l'aspiration de l'air hors de l'atmosphère sont interrompus par l'organe d'arrêt (12).

2. Dispositif pour la réalisation du procédé suivant la revendication 1, dispositif dans lequel un compresseur (10) est relié, via une conduite de refoulement (9), à une conduite d'aspiration (6), caractérisé en ce que, face à la conduite de refoulement (9), une conduite (8) de recyclage des gaz d'échappement débouche dans la conduite d'aspiration (6), tandis qu'un organe d'arrêt (12) est disposé de façon à fermer la conduite de refoulement (9) lors de l'aspiration, de même que la conduite d'aspiration (6) et la conduite (8) de recyclage des gaz d'échappement lors de l'alimentation.

## Claims

1. A process for operating an internal-combustion engine with a disconnectable supercharger, characterised in that

a) during idling and under the lower part load, the compressor (10) is disconnected and combustion air is sucked in from the atmosphere, and some of the exhaust gases are admixed with the stream of intake air via an exhaust-gas return line (8), a supercharger delivery line (9) of the compressor (10) being closed by a shut-off means (12);
b) under the upper part load and full load, the compressor (10) compresses combustion air from the atmosphere and feeds it through an intake port (3) to the internal-combustion engine whilst the exhaust-gas return and the intake of air from the atmosphere are interrupted by the shut-off means (12).

2. A device for carrying out the process according to claim 1, in which a compressor (10) is connected to an intake line (6) via a supercharger delivery line (9), characterised in that an exhaust-gas return line (8) opens into the intake line (6) opposite the supercharger delivery line (9), and a shut-off means (12) is arranged in such a way that during suction the supercharger delivery line (9) is closed and during supercharging the intake line (6) and the exhaust-gas return line (8) are closed.